# EUROPEAN PATENT APPLICATION

(11) **EP 4 644 036 A1**
(43) Date of publication of application: **05.11.2025**
(21) Application number: 25726202.2
(22) Date of filing: 06.01.2025
(51) Int. Cl.: B23K 37/00

(54) **WELDING SYSTEM, BATTERY PRODUCTION LINE AND WELDING METHOD**

(30) Priority: 04.03.2024 CN 202410239666
(71) Applicant: Contemporary Amperex Technology Co., Limited, Jiaocheng District Ningde Fujian 352100 (CN)
(72) Inventor: WANG, Tengteng, Ningde, Fujian 352100 (CN); YANG, Kun, Ningde, Fujian 352100 (CN); FAN, Xiang, Ningde, Fujian 352100 (CN)
(74) Representative: Herrmann, Uwe
(86) International application number: PCT/CN2025/070826
(87) International publication number: WO 2025/185340

(57) **Abstract**

This disclosure discloses a welding system, a battery production line, and a welding method, pertaining to the field of battery production technology. The welding system is configured to weld an adapting piece. The welding system includes a frame, a welding assembly, a loading assembly, and a driving assembly. The frame has a plurality of loading stations, where at least one loading station is a welding station, and at least one loading station is a feeding station. The welding assembly is disposed on the frame. The loading assembly is movably disposed on the frame. Each loading station is correspondingly provided with a loading assembly. The loading assembly is configured to carry a bare cell. The welding assembly is configured to weld the bare cell carried by the loading assembly located at the welding station. The driving assembly is capable of driving the loading assembly to sequentially move through each loading station along a first direction. The loading assembly, under the action of the driving assembly, moves above or below the loading station along a second direction to return to a corresponding loading station.

## Description

### CROSS-REFERENCE TO RELATED APPLICATIONS

This disclosure claims priority to Chinese Patent Application No. 202410239666.6, filed on March 4, 2024 and entitled "WELDING SYSTEM, BATTERY PRODUCTION LINE, AND WELDING METHOD", which is incorporated herein by reference in its entirety.

### TECHNICAL FIELD

This disclosure relates to the field of battery technology, and specifically to, an adhesive application system, an adhesive application method, and a battery production line.

### BACKGROUND

The application of new energy batteries in daily life and industry is becoming increasingly widespread. For example, new energy vehicles equipped with batteries have been widely used. Additionally, batteries are being increasingly applied in fields such as energy storage. During the production process of batteries, an adapting piece needs to be welded to a tab of a bare cell.

In related technologies, a welding device used for welding the adapting piece to the tab of the bare cell occupies a large area, has a slow welding pace, and exhibits low production efficiency.

### SUMMARY

In view of this, embodiments of this disclosure aim to provide a welding system, a battery production line, and a welding method to reduce the occupied area of a welding device, improve the battery production efficiency, and achieve a faster welding pace.

To achieve the above objectives, the technical solutions of the embodiments of this disclosure are implemented as follows:
An embodiment of this disclosure provides a welding system, where the welding system is configured to weld an adapting piece, including:
a frame having a plurality of loading stations spaced apart, where a direction of arrangement of the plurality of loading stations intersects with a vertical direction, at least one loading station is a welding station, and at least one loading station is a feeding station;
a welding assembly disposed on the frame;
a loading assembly movably disposed on the frame, where each loading station is correspondingly provided with a loading assembly, the loading assembly is configured to carry a bare cell, and the welding assembly is configured to weld the bare cell carried by the loading assembly located at the welding station; and
a driving assembly capable of driving the loading assembly to sequentially move through each loading station along a first direction, where the loading assembly, under the action of the driving assembly, moves above or below the loading station along a second direction to return to a corresponding loading station; the second direction is opposite to the first direction; and the feeding station is located on a side of the welding station facing the second direction.

In this embodiment of this disclosure, the driving assembly is capable of driving the loading assembly to sequentially pass through each loading station along the first direction; and the loading assembly, under the action of the driving assembly, can return to the corresponding loading station along the second direction from above or below the loading station. The driving assembly drives the loading assembly to pass through the feeding station so that the bare cell and the adapting piece can be loaded onto the loading assembly located at the feeding station. The driving assembly drives the loading assembly carrying the loaded bare cell and adapting piece to pass through the welding station, and the welding assembly welds the bare cell and the adapting piece carried by the loading assembly located at the welding station. After the welding of the bare cell and the adapting piece is completed, the loading assembly, under the action of the driving assembly, can return to the feeding station along the second direction from above or below the loading station, thereby enabling cyclic loading and welding operations. The first direction and the second direction are spaced apart along the vertical direction and are opposite to each other, reducing the dimension of the frame in a width direction. During the movement of the loading assembly along the first direction, the bare cell carried by the loading assembly can be processed by related devices located on two sides of the frame, thereby reducing the occupied area of the welding system. Furthermore, the loading stations include the welding station and the feeding station, and multiple stations in the welding system work together, resulting in a faster welding pace and improved battery production efficiency.

In an embodiment, two adjacent loading assemblies are detachably connected to each other; the driving assembly includes a first traversing device and a second traversing device; the first traversing device is capable of driving the loading assembly to sequentially move through each loading station along the first direction; and the second traversing device is capable of being drivingly connected to the loading assembly, and the second traversing device is configured to move the loading assembly along the second direction.

In this embodiment of this disclosure, the two adjacent loading assemblies are detachably connected to each other; the driving assembly includes the first traversing device and the second traversing device; the first traversing device is capable of driving the loading assembly to move along the first direction; and the second traversing device is configured to drive the loading assembly to move along the second direction. The movement of the loading assembly along the first direction and the second direction is driven by corresponding moving components, mitigating interference during the movement of the loading assembly.

In an embodiment, the first traversing device is capable of driving the loading assembly to sequentially move through each welding station from the feeding station along the first direction, and the second traversing device is configured to move the loading assembly above or below the loading station along the second direction to return to the corresponding feeding station.

In the solution of this embodiment of this disclosure, the first traversing device is capable of driving the loading assembly to sequentially move through each welding station from the feeding station, and the second traversing device is capable of driving the loading assembly along the second direction to return to the corresponding feeding station. In the process of the loading assembly moving through each welding station, under the driving of the first traversing device, the movement of the loading assembly along the first direction shares the same driving device, resulting in a simple structure and low cost of the welding system.

In an embodiment, the driving assembly further includes two lifting devices; the two lifting devices are respectively located below the loading stations at two ends of the direction of arrangement of the loading stations; and the second traversing device is configured to move the loading assembly from one lifting device to the other lifting device along the second direction.

In the solution of this embodiment of this disclosure, the driving assembly further includes two lifting mechanisms to enable the first traversing device and the second traversing device to form a cycle, with a high degree of automation in the driving process; and the driving directions of the components in the driving assembly are less likely to interfere with each other, resulting in a stable driving process.

In an embodiment, two ends of the loading assembly along the direction of arrangement of the loading stations are each formed with a connecting groove and a plug-in piece adapted to the connecting groove; the connecting groove runs through the loading assembly along the vertical direction; and the plug-in piece is capable of moving into or out of the connecting groove along the vertical direction.

In this embodiment of this disclosure, the loading assembly is formed with the connecting groove and the plug-in piece, and the plug-in piece is capable of moving into or out of the connecting groove along the vertical direction to achieve detachable connection between adjacent loading assemblies. When the loading assembly is located at a position corresponding to the lifting device, the lifting device can drive the loading assembly to descend, causing the plug-in piece to disengage from the connecting groove, thereby achieving separation of two adjacent loading assemblies, and resulting in a simple detachable connection method and low cost. When the plug-in piece is located in the connecting groove, moving one loading assembly can drive other loading assemblies to move.

In an embodiment, at least two loading stations are driving stations; the driving station is located on a side of the welding station facing the first direction; the first traversing device is capable of being detachably connected to the loading assembly located at the driving station; and the first traversing device is configured to drive the loading assembly located at the driving station to move toward the first direction.

In this embodiment of this disclosure, at least two loading stations are driving stations; the driving station is located on the side of the welding station facing the first direction; the first traversing device drives the loading assemblies by driving the loading assembly located at the driving station; and the first traversing device is positioned as far as possible from the welding station, mitigating interference between the first traversing device and the welding assembly, allowing for smoother movement of the loading assembly.

In an embodiment, the second traversing device includes:
a belt formed with an engaging portion; and
a rotating member configured to drive the belt to move, where when the lifting device drives the loading assembly to move downward, the loading assembly is capable of being engaged with the engaging portion, so that the belt is capable of driving the loading assembly to move toward the other lifting device along the second direction.

In the solution of this embodiment of this disclosure, the second traversing device includes the belt and the transmission member, and when the lifting device drives the loading assembly to move downward, the loading assembly can be engaged with the engaging portion. The engagement of the loading assembly with the engaging portion enables the loading assembly to move relatively stably along the second direction with the belt toward the other lifting device, resulting in a stable movement process.

In an embodiment, the welding system further includes a locking device; the locking device is disposed across two opposite sides of the belt to clamp or release the belt; and the loading assembly includes:
a loading body movably disposed on the frame, where the loading body is configured to carry a bare cell; and
a mounting member connected to the loading body, where the mounting member is provided with a first coupling portion configured to be engaged with the engaging portion; the first coupling portion is located below the loading body; when the first coupling portion is engaged with the engaging portion, the locking device is located below the loading body; and the locking device is spaced apart from the first coupling portion along an extension direction of the belt.

In the solution of this embodiment of this disclosure, the welding system further includes the locking device; the locking device is disposed across the two opposite sides of the belt to clamp or release the belt; and the loading assembly includes a mounting member, where the mounting member is configured to be engaged with the engaging portion. The locking device can clamp the belt, enabling the mounting member of the loading assembly to be engaged more accurately with the engaging portion of the belt via the first coupling portion.

In an embodiment, the locking device includes:
a first clamping block located on a side of the belt facing the engaging portion, where the first clamping block is provided with a second coupling portion configured to be engaged with the engaging portion;
a second clamping block located on a side of the belt facing away from the engaging portion; and
a driving device at least configured to drive the first clamping block to move close to or away from the second clamping block, where when the driving device drives the first clamping block to move close to the second clamping block such that the second coupling portion is engaged with the engaging portion, the lifting device drives the loading assembly to move downward such that the first coupling portion is engaged with the engaging portion.

In the solution of this embodiment of this disclosure, the locking device includes the first clamping block and the second clamping block; the first clamping block is provided with the second coupling portion engaged with the engaging portion; and the driving device is capable of driving the first clamping block and the second clamping block to move close to each other to clamp the belt. The engagement of the second coupling portion with the engaging portion enables the locking device to effectively block the movement of the belt while reducing damage to the belt by the locking device to some extent.

In an embodiment, a plurality of welding stations are provided; each welding station is correspondingly provided with the welding assembly; and a plurality of welding assemblies are spaced apart along a direction of arrangement of adjacent loading stations.

In this embodiment of this disclosure, the plurality of welding stations are provided; each welding station is correspondingly provided with the welding assembly; the adapting piece and the tab need to be welded many times to connect a pair of bare cells; and the bare cells pass sequentially through the plurality of welding stations can accelerate the welding pace. The plurality of welding assemblies are capable of welding a plurality of bare cells, improving the production efficiency.

In an embodiment, at least one welding assembly and the remaining corresponding welding assemblies are respectively located on two sides of the frame along a preset direction, the preset direction intersecting with the first direction and the vertical direction.

In this embodiment of this disclosure, the at least one welding assembly and the remaining welding assemblies are respectively located on the two sides of the frame along the preset direction, and the arrangement of positions of the welding assemblies makes full use of the vacant space along the preset direction of the frame, thereby mitigating interference between the welding assemblies.

In an embodiment, the welding assembly located on one side of the welding station along the preset direction is a first welding assembly; the preset direction intersects with the first direction and the vertical direction; the welding assembly located on the other side of the welding station along the preset direction is a second welding assembly; and the first welding assembly and the second welding assembly are alternately arranged along the first direction.

In the solution of this embodiment of this disclosure, the first welding assembly and the second welding assembly are located on two opposite sides along the preset direction, and the first welding assembly and the second welding assembly are alternately arranged along the first direction. The first welding assembly and the second welding assembly can avoid interference with each other as much as possible, resulting in a stable welding process.

In an embodiment, the welding system further includes a shaping assembly; the shaping assembly includes a driving member, a shaping member, and two traction members; the two traction members are spaced apart along a preset direction, the preset direction intersecting with a direction of arrangement of two adjacent loading stations; two ends of the shaping member are respectively connected to the two traction members; the shaping member is configured to shape a tab; the two traction members are drivingly connected to the driving member; and the driving member is capable of driving the traction members to move so as to enable the shaping member to shape the tab.

In this embodiment of this disclosure, the welding system further includes the shaping assembly, and the driving member of the shaping assembly is capable of driving the traction members to move, thereby driving the shaping member connected to the traction members to shape the tab. Shaping the tab can mitigate issues such as curling or folding of the tab during placement of the bare cell onto the loading assembly, allowing the tab to fit flatly against the adapting piece, making the welding process more stable, and improving the product quality of the finished battery.

In an embodiment, two shaping assemblies are provided; and the two shaping assemblies are spaced apart along the direction of arrangement of the two adjacent loading stations.

In this embodiment of this disclosure, two shaping assemblies are provided; and the two shaping assemblies can respectively shape tabs of a pair of bare cells, with high shaping efficiency, thereby improving the feeding speed of the bare cells.

In an embodiment, two opposite sides of the corresponding loading assembly along the preset direction are provided with the driving member and the traction member; the shaping member is disposed across the two opposite sides of the corresponding loading assembly along the preset direction; the two shaping assemblies are configured to respectively shape tabs of a pair of bare cells; and the traction members corresponding to the two shaping assemblies are located between the driving members corresponding to the two shaping assemblies along the direction of arrangement of the two adjacent loading stations.

In this embodiment of this disclosure, the two opposite sides of the corresponding loading assembly along the preset direction are provided with the driving member and the traction member; and the shaping member is disposed across the two opposite sides of the corresponding loading assembly along the preset direction. The shaping assemblies can shape the tabs of a pair of bare cells, improving the shaping efficiency of the shaping assemblies, thereby reducing the overall processing time.

In an embodiment, there are at least two shaping members corresponding to each shaping assembly; a direction of arrangement of the at least two shaping members spaced apart corresponding to each shaping assembly is arranged along the direction of arrangement of the two adjacent loading stations; and the driving member drives the traction members to move so as to drive the at least two corresponding shaping members to move along the direction of arrangement of the two adjacent loading stations.

In this embodiment of this disclosure, there are at least two shaping members, and the direction of arrangement of the at least two shaping members spaced apart corresponding to each shaping assembly is arranged along the direction of arrangement of the two adjacent loading stations. During the process of shaping the tab through the shaping members, the shaping effect on the tab is improved, and the contact process is smoother.

In an embodiment, a material of the shaping member is an insulating material; and the shaping member is an insulating wire.

In this embodiment of this disclosure, the material of the shaping member is the insulating material. This mitigates the risk of the shaping member causing a short circuit in the bare cell during the process of shaping the tab of the bare cell. Furthermore, the shaping member is the insulating wire, and a flexible member can reduce damage to the tab by the shaping member.

In an embodiment, the driving assembly is capable of driving the loading assembly to sequentially move through each welding station from the feeding station along the first direction; and the loading assembly, under the action of the driving assembly, moves above or below the loading station along the second direction to return to the corresponding feeding station.

In this embodiment of this disclosure, under the driving of the driving assembly, the loading assembly moves from the feeding station through each welding station along the first direction and moves above or below the loading station along the second direction to return to the corresponding feeding station. The movement process has a high degree of automation, reducing manual operation to some extent.

In an embodiment, the first direction is a direction from the feeding station toward the welding station along the direction of arrangement of the plurality of loading stations; and the first direction intersects with the vertical direction.

In this embodiment of this disclosure, the first direction is the direction from the feeding station toward the welding station, and the first direction intersects with the vertical direction. The feeding station and the welding station are connected by the plurality of loading stations arranged substantially along the first direction, minimizing the distance from the feeding station to the welding station as much as possible, and resulting in high processing efficiency.

In an embodiment, the loading assemblies corresponding to the plurality of loading stations are sequentially connected to each other.

In this embodiment of this disclosure, the loading assemblies corresponding to the plurality of loading stations are sequentially connected to each other, and driving any one of the sequentially connected loading assemblies can drive the plurality of loading assemblies to move synchronously, allowing flexible positioning of the driving assembly.

An embodiment of this disclosure further provides a battery production line, including:
the welding system according to any one of the foregoing embodiments; and
a feeding assembly configured to feed the welding system.

An embodiment of this disclosure further provides a welding method, where the welding method is applied to a welding system; the welding system includes a welding assembly, a loading assembly, and a driving assembly, the driving assembly including a first traversing device, a second traversing device, and two lifting devices; and the welding method includes:
moving the first traversing device between at least two loading stations to drive loading assemblies corresponding to the loading stations to move;
welding, by the welding assembly, a bare cell carried by the loading assembly located at a welding station;
removing the bare cell from the corresponding loading assembly when the welding of the bare cell carried by the loading assembly is completed;
moving, by the corresponding lifting device, a loading assembly corresponding to a loading station on a side of the welding station facing a first direction downward to be connected to the second traversing device;
moving, by the second traversing device, the loading assembly along a second direction to below a feeding station located on a side of the welding station facing the second direction; and
lifting, by the corresponding lifting device, the loading assembly to the feeding station;
where the first direction is opposite to the second direction.

In this embodiment of this disclosure, a cycle of the loading station along the first direction, the second direction, and the vertical direction is achieved through the first traversing device, the second traversing device, and the two lifting devices of the driving assembly. The first direction and the second direction are spaced apart along the vertical direction, reducing the dimension of the welding assembly arrangement in a width direction. During the movement of the loading assembly along the first direction, the bare cell carried by the loading assembly can be welded by the welding assemblies located on two sides of the frame, thereby reducing the occupied area of the welding system.

In an embodiment, the welding method further includes:
shaping, by a shaping assembly, a tab of a bare cell when the bare cell is located above the corresponding feeding station; and
placing the bare cell onto the loading assembly corresponding to the feeding station when the shaping of the bare cell is completed.

In this embodiment of this disclosure, when the bare cell is located above the corresponding feeding station, the tab of the bare cell is shaped by the shaping assembly. Shaping the tab can mitigate issues such as curling or folding of the tab during placement of the bare cell onto the loading assembly, allowing the tab to fit flatly against the adapting piece, making the welding process more stable, and improving the product quality of the finished battery.

In an embodiment, the shaping assembly includes a driving member, a shaping member, and two traction members; and the shaping, by a shaping assembly, a tab of a bare cell includes:
driving, by the driving member, the traction members to move along a direction of arrangement of two adjacent loading stations so as to enable the shaping member to shape the tab.

In this embodiment of this disclosure, the driving member drives the traction members to move along the direction of arrangement of the adjacent loading stations so as to enable the shaping member to shape the tab. The shaping process is relatively convenient and simple, and the shaping member can shape two tabs of the bare cell along the direction of arrangement of the two traction members.

This disclosure further provides a welding method, where the welding method includes:
feeding a bare cell and an adapting piece at a feeding station during a process of welding the bare cell and the adapting piece at a welding station;
moving the bare cell and the adapting piece located at the feeding station to the welding station;
welding the bare cell and the adapting piece at the welding station during the process of feeding the bare cell and the adapting piece at the feeding station; and
removing the welded bare cell and adapting piece from the welding station.

According to the welding system provided in the embodiments of this disclosure, the driving assembly can drive the loading assembly to sequentially pass through each loading station along the first direction; and the loading assembly, under the action of the driving assembly, can return to the corresponding loading station along the second direction from below the loading station. The first direction and the second direction are spaced apart along the vertical direction and are opposite to each other, reducing the dimension of the frame in the width direction. During the movement of the loading assembly along the first direction, the bare cell carried by the loading assembly can be processed by related devices located on two sides of the frame, thereby reducing the occupied area of the welding system. Furthermore, the loading stations include the welding station and the feeding station, and multiple stations in the welding system work together, resulting in a faster welding pace and improved battery production efficiency.

### BRIEF DESCRIPTION OF DRAWINGS

FIG. 1 is a schematic structural diagram of a welding system according to an embodiment of this disclosure, where a welding assembly is not shown;
FIG. 2 is a partially enlarged view of position A in FIG. 1;
FIG. 3 is a partially enlarged view of position B in FIG. 1;
FIG. 4 is a schematic structural diagram of a battery production line according to an embodiment of this disclosure;
FIG. 5 is a partially enlarged view of position C in FIG. 4;
FIG. 6 is a partially enlarged view of position D in FIG. 1;
FIG. 7 is a flowchart of a welding method according to an embodiment of this disclosure;
FIG. 8 is a flowchart of a welding method according to a first embodiment of this disclosure;
FIG. 9 is a flowchart of a welding method according to a second embodiment of this disclosure;
FIG. 10 is a flowchart of a method for feeding an adapting piece according to an embodiment of this disclosure;
FIG. 11 is a flowchart of an adhesive application method according to an embodiment of this disclosure;
FIG. 12 is a flowchart of a welding method according to a third embodiment of this disclosure;
FIG. 13 is a simple structural diagram of a welding system according to an embodiment of this disclosure;
FIG. 14 is a schematic structural diagram of a welding system according to an embodiment of this disclosure;
FIG. 15 is a partially enlarged view of position D in FIG. 1;
FIG. 16 is a schematic diagram of a shaping member shaping a tab according to an embodiment of this disclosure; and
FIG. 17 is a flowchart of a welding method according to an embodiment of this disclosure.

Description of reference signs:
1. frame; 1a. loading station; 1b. welding station; 1c. first driving station; 1d. second driving station; 1e. first feeding station; 1f. second feeding station; 1g. first welding station; 1h. second welding station; 2. welding assembly; 2a. first direction; 2b. second direction; 2c. vertical direction; 2d. preset direction; 20. first welding assembly; 21. second welding assembly; 3. loading assembly; 3a. connecting groove; 3b. plug-in piece; 30. loading body; 31. mounting member; 31a. first coupling portion; 4. driving assembly; 40. first traversing device; 41. second traversing device; 410. rotating member; 411. belt; 411a. engaging portion; 42. first lifting device; 43. second lifting device; 5. bare cell; 5a. tab; 6. shaping assembly; 60. driving member; 61. shaping member; 62. traction member; 7. feeding assembly; 8. adhesive application assembly; 9. locking device; 90. first clamping block; 90a. second coupling portion; 91. second clamping block; and 92. driving device.

### DESCRIPTION OF EMBODIMENTS

The embodiments of the technical solutions of this disclosure will be described in detail below with reference to the drawings. The following embodiments are merely intended for a clearer description of the technical solutions of this disclosure and therefore are used as just examples which do not constitute any limitations on the protection scope of this disclosure.

Unless otherwise defined, all technical and scientific terms used herein shall have the same meanings as commonly understood by persons skilled in the art to which this disclosure relates. The terms used herein are intended to merely describe the specific embodiments rather than to limit this disclosure. The terms "include", "comprise", and "have" and any other variations thereof in the specification, claims and brief description of drawings of this disclosure are intended to cover non-exclusive inclusions.

In the description of the embodiments of this disclosure, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this disclosure, "a plurality of" means at least two, unless otherwise specifically defined.

Reference to "embodiment" in the specification means that specific features, structures, or characteristics described with reference to an embodiment may be included in at least one embodiment of this disclosure. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of this disclosure, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements.

In the description of the embodiments of this disclosure, unless otherwise explicitly specified and limited, the technical term "contact" should be understood in a broad sense, which may be direct contact or contact across an intermediate medium layer, and may be contact between two entities with substantially no interaction force or contact between two entities with interaction force.

As part of the inventive concept of this disclosure, before the embodiments of this disclosure are described, the reasons for the large occupied area of a welding device used for welding an adapting piece to a tab of a bare cell in related technologies, as well as the reasons for the slow welding pace and low production efficiency, need to be analyzed. Through reasonable analysis, the technical solutions of the embodiments of this disclosure are obtained.

In related technologies, a loading assembly typically move on an approximately horizontal plane in a circulating manner, and a welding assembly disposed on one or two sides of the loading assembly further increases the occupied area of a welding system. When the welding assembly is disposed on two sides of the loading assembly in a movement direction, due to the short distance between a forward transport line and a return transport line of the loading assembly, the welding assembly cannot be disposed between the forward transport line and the return transport line. Therefore, the welding assembly needs to be disposed on two sides of the forward transport line and the return transport line along a width direction, resulting in a large occupied area of the welding system. In related technologies, an adapting piece and a bare cell are fed and welded at a same loading station. During the feeding process of the adapting piece and the bare cell, welding of the adapting piece and the bare cell is almost impossible, and during the welding process of the adapting piece and the bare cell, feeding of the adapting piece and the bare cell is almost impossible. Feeding and welding cannot be performed simultaneously, resulting in a slow welding pace and low production efficiency of the entire welding system.

In this disclosure, a driving assembly 4 drives a loading assembly 3 to move through each loading station 1a along a first direction 2a and moves the loading assembly 3 below the loading station 1a along a second direction 2b to return to a corresponding loading station 1a, thereby reducing the occupied area of the welding system.

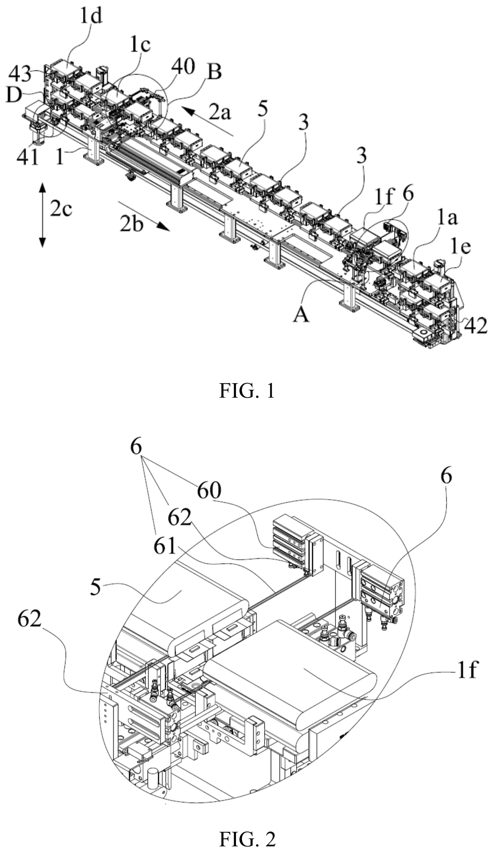

According to a first aspect of the embodiments of this disclosure, a welding system is provided. Referring to FIG. 1 to FIG. 5, the welding system is configured to weld an adapting piece, including: a frame 1, a welding assembly 2, a loading assembly 3, and a driving assembly 4. The frame 1 has a plurality of loading stations 1a spaced apart, a direction of arrangement of the plurality of loading stations 1a intersects with a vertical direction 2c, at least one loading station 1a is a welding station 1b, and at least one loading station 1a is a feeding station. The welding assembly 2 is disposed on the frame 1. The loading assembly 3 is movably disposed on the frame 1, each loading station 1a is correspondingly provided with a loading assembly 3, the loading assemblies 3 corresponding to the plurality of loading stations 1a are sequentially connected to each other, the loading assembly 3 is configured to carry a bare cell 5, and the welding assembly 2 is configured to weld the bare cell 5 carried by the loading assembly 3 located at the welding station 1b. The driving assembly 4 is capable of driving the loading assembly 3 to sequentially move through each loading station 1a along a first direction 2a; and the loading assembly 3, under the action of the driving assembly 4, moves below the loading station 1a along a second direction 2b to return to a corresponding loading station 1a; the second direction 2b is opposite to the first direction 2a; and the feeding station is located on a side of the welding station 1b facing the second direction 2b.

The frame 1 is a main support structure of the welding system, and other mechanisms on the welding system are substantially supported by the frame 1.

Exemplarily, the frame 1 is a bracket welded from section steel.

Exemplarily, the frame 1 may be integrally formed.

The welding assembly 2 is a component in the welding system that primarily performs the welding function, and the bare cell 5 and the adapting piece are welded by the welding assembly 2.

Exemplarily, the welding assembly 2 includes a welding torch configured for welding.

Exemplarily, the welding assembly 2 further includes a driving mechanism configured to drive the welding torch to move to a corresponding welding position.

Exemplarily, the driving mechanism may be a motor.

The loading assembly 3 is a structure in the welding system primarily configured to support the bare cell 5 and/or the adapting piece.

Exemplarily, the loading assembly 3 may be a tray.

The driving assembly 4 is a structure in the welding system that provides power for the movement of the loading assembly 3.

Exemplarily, the driving assembly 4 may be one or more motors.

Exemplarily, the driving assembly 4 may be one or more cylinders.

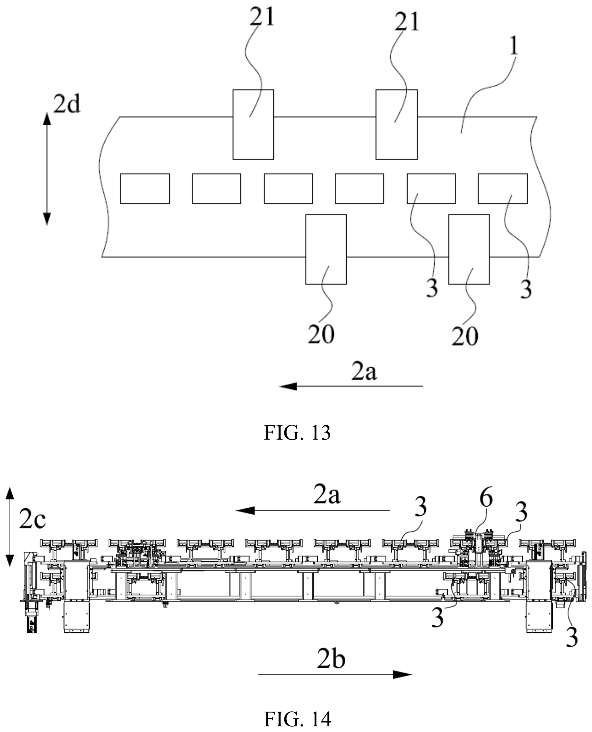

The direction of arrangement of the plurality of loading stations 1a intersects with the vertical direction 2c. Exemplarily, referring to FIG. 1 and FIG. 14, the direction of arrangement of the plurality of loading stations 1a is perpendicular to the vertical direction 2.

In an embodiment, referring to FIG. 1 to FIG. 6 and FIG. 13 to FIG. 16, the welding system is configured to weld an adapting piece, including: a frame 1, a welding assembly 2, a loading assembly 3, and a driving assembly 4. The frame 1 has a plurality of loading stations 1a spaced apart, a direction of arrangement of the plurality of loading stations 1a intersects with a vertical direction 2c, at least one loading station 1a is a welding station 1b, and at least one loading station 1a is a feeding station. The welding assembly 2 is disposed on the frame 1. The loading assembly 3 is movably disposed on the frame 1, each loading station 1a is correspondingly provided with a loading assembly 3, the loading assembly 3 is configured to carry a bare cell 5, and the welding assembly 2 is configured to weld the bare cell 5 carried by the loading assembly 3 located at the welding station 1b. The driving assembly 4 is capable of driving the loading assembly 3 to sequentially move through each loading station 1a along a first direction 2a; and the loading assembly 3, under the action of the driving assembly 4, moves above or below the loading station 1a along a second direction 2b to return to a corresponding loading station 1a; the second direction 2b is opposite to the first direction 2a; and the feeding station is located on a side of the welding station 1b facing the second direction 2b.

The frame 1 is the main support structure of the welding system, and other mechanisms on the welding system are substantially supported by the frame 1.

Exemplarily, the frame 1 is a bracket welded from section steel.

Exemplarily, the frame 1 may be integrally formed.

The welding assembly 2 is a component in the welding system that primarily performs the welding function, and the bare cell 5 and the adapting piece are welded by the welding assembly 2.

Exemplarily, the welding assembly 2 includes a welding torch configured for welding.

Exemplarily, the welding assembly 2 further includes a driving mechanism configured to drive the welding torch to move to a corresponding welding position.

Exemplarily, the driving mechanism may be a motor.

The loading assembly 3 is a structure in the welding system primarily configured to support the bare cell 5 and/or the adapting piece.

Exemplarily, the loading assembly 3 may be a tray.

The driving assembly 4 is a structure in the welding system that provides power for the movement of the loading assembly 3.

Exemplarily, the driving assembly 4 may be one or more motors.

Exemplarily, the driving assembly 4 may be one or more cylinders.

Exemplarily, two feeding stations are provided, one feeding station corresponding to the driving assembly 4 is a first feeding station 1e, the other feeding station is a second feeding station 1f, the second feeding station 1f is located between the first feeding station le and the welding station 1b, the first feeding station le is configured for feeding the adapting piece, and the second feeding station 1f is configured for feeding the bare cell 5.

The direction of arrangement of the plurality of loading stations 1a is substantially parallel in two directions. Exemplarily, referring specifically to FIG. 1 and FIG. 14, the direction of arrangement of the plurality of loading stations 1a is a left-right direction as shown in the figure, that is, the plurality of loading stations 1a are arranged along the left-right direction as shown in the figure.

The first direction 2a is one of the directions along the direction of arrangement of the plurality of loading stations 1a. Exemplarily, referring specifically to FIG. 1 and FIG. 14, the first direction 2a is a leftward direction as shown in the figure, that is, the driving assembly 4 is capable of driving the loading assembly 3 to sequentially move through each loading station 1a along the leftward direction as shown in the figure.

The second direction 2b is another direction along the direction of arrangement of the plurality of loading stations 1a. Exemplarily, referring specifically to FIG. 1 and FIG. 14, the second direction 2b is a rightward direction as shown in the figure, that is, the loading assembly 3, under the action of the driving assembly 4, moves above or below the loading station 1a along the rightward direction as shown in the figure to return to the feeding station.

Exemplarily, referring to FIG. 1 and FIG. 14, the first direction 2a is orthogonally arranged with the vertical direction 2c.

Exemplarily, a battery cell includes a housing, an end cap, and a bare cell 5, where the end cap is capable of covering the housing, and the bare cell 5 is disposed in the housing.

Exemplarily, the battery cell further includes a conductive terminal and an adapting piece, where the conductive terminal is disposed on the end cap, and the adapting piece is connected to the conductive terminal and a tab 5a of the bare cell 5 to implement electrical conduction between the tab 5a with the conductive terminal.

Exemplarily, the conductive terminal is a pole.

Exemplarily, the loading assembly 3, under the action of the driving assembly, can move below the loading station along the second direction. This reduces the possibility of interference with the loading assembly 3 located at the loading station by the loading assembly 3 moving along the second direction.

Exemplarily, the loading assembly 3, under the action of the driving assembly, can return to the feeding station from below the loading station along the second direction.

Exemplarily, the loading assembly 3, under the action of the driving assembly, can move above the loading station along the second direction.

Exemplarily, the loading assembly 3, under the action of the driving assembly, can return to the feeding station from above the loading station along the second direction.

In an embodiment of this disclosure, the driving assembly 4 is capable of driving the loading assembly to sequentially pass through each loading station 1a along the first direction 2a; and the loading assembly 3, under the action of the driving assembly 4, can return to the corresponding loading station 1a from above or below the loading station 1a along the second direction 2b. The first direction 2a and the second direction 2b are spaced apart along the vertical direction 2c and are opposite to each other, reducing the dimension of the frame 1 in a width direction. During the movement of the loading assembly 3 along the first direction 2a, the bare cell 5 carried by the loading assembly 3 can be processed by related devices located on two sides of the frame 1, thereby reducing the occupied area of the welding system. Furthermore, the loading stations 1a include the welding station 1b and the feeding station, and multiple stations in the welding system work together, resulting in a faster welding pace and improved battery production efficiency.

Exemplarily, the width direction of the frame 1 intersects with both the first direction 2a and the vertical direction 2c.

Exemplarily, referring to FIG. 1, the width direction of the frame 1 is perpendicular to both the first direction 2a and the vertical direction 2c.

In an embodiment, referring to FIG. 1, two adjacent loading assemblies 3 are detachably connected to each other; the driving assembly 4 includes a first traversing device 40 and a second traversing device 41; the first traversing device 40 is capable of driving the loading assembly 3 to sequentially move through each loading station 1a along the first direction 2a; and the second traversing device 41 is capable of being drivingly connected to the loading assembly 3, and the second traversing device 41 is configured to move the loading assembly 3 along the second direction 2b.

The first traversing device 40 is a structure that primarily provides power for the movement of the loading assembly 3 along the first direction.

Exemplarily, the first traversing device 40 drives the loading assembly 3 located at the loading station 1a to move along the first direction.

Exemplarily, the first traversing device 40 is a cylinder or a motor.

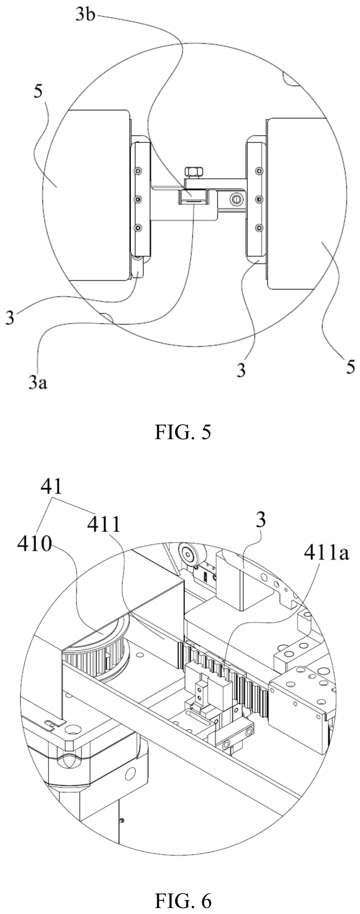

Exemplarily, referring to FIG. 6, the second traversing device 41 includes a belt 411 and a rotating member 410, where the rotating member 410 is configured to drive the belt 411 to move, the belt 411 is formed with an engaging portion 411a; when the lifting device drives the loading assembly 3 to move downward, the loading assembly 3 is capable of being engaged with the engaging portion 411a, so that the belt 411 is capable of driving the loading assembly 3 to move toward the other lifting device along the second direction 2b.

Exemplarily, the belt 411 is a synchronous belt.

Exemplarily, the second traversing device 41 may be a rack-and-pinion transmission.

In an embodiment of this disclosure, two adjacent loading assemblies 3 are detachably connected to each other. The driving assembly 4 includes a first traversing device 40 and a second traversing device 41. The first traversing device 40 is capable of driving the loading assembly 3 to move along the first direction 2a; and the second traversing device 41 is configured to drive the loading assembly 3 to move along the second direction 2b. The movement of the loading assembly 3 along the first direction 2a and the second direction 2b is driven by corresponding moving components, mitigating interference during the movement of the loading assembly 3.

It can be understood that the embodiments of this disclosure do not limit the structure of the driving assembly 4. The driving assembly 4 may further include a third traversing device, where the first traversing device 40 and the third traversing device together drive the loading assembly 3 to sequentially move through each loading station 1a along the first direction 2a.

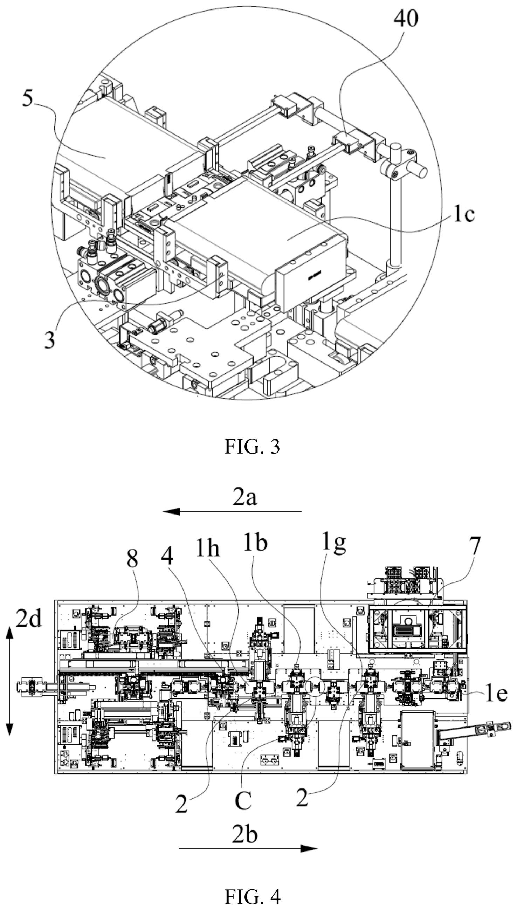

In an embodiment, referring to FIG. 4, the first traversing device 40 is capable of driving the loading assembly 3 to sequentially move through each welding station 1b from the feeding station along the first direction 2a, and the second traversing device 41 is configured to move the loading assembly 3 above or below the loading station 1a along the second direction 2b to return to the corresponding feeding station.

In the solution of this embodiment of this disclosure, the first traversing device 40 is capable of driving the loading assembly 3 to sequentially move through each welding station 1b from the feeding station, and the second traversing device 41 is capable of driving the loading assembly 3 along the second direction 2b to return to the corresponding feeding station. In the process of the loading assembly 3 moving through each welding station 1b, under the driving of the first traversing device 40, the movement of the loading assembly 3 along the first direction 2a shares the same driving device 92, resulting in a simple structure and low cost of the welding system.

It can be understood that the embodiments of this disclosure are not limited to the loading assembly 3 sequentially moving through each welding station 1b from the feeding station along the first direction 2a. Exemplarily, the first traversing device 40 drives the loading assembly 3 to move through some welding stations 1b from the feeding station along the first direction 2a, and the second traversing device 41 drives the loading assembly 3 to move through the remaining welding stations 1b.

In an embodiment, referring to FIG. 1, the driving assembly 4 further includes two lifting devices; the two lifting devices are respectively located below the loading stations 1a at two ends of the direction of arrangement of the loading stations 1a; and the second traversing device 41 is configured to move the loading assembly 3 from one lifting device to the other lifting device along the second direction 2b.

The lifting device is a structure capable of driving upward or downward movement.

Exemplarily, the loading assembly 3, through the upward or downward movement of the lifting device, can be transferred from the loading station 1a to below the loading station 1a, or transferred from below the loading station 1a to the feeding station.

Exemplarily, referring to FIG. 1, one lifting device is located below the first feeding station 1e.

Exemplarily, referring to FIG. 1, the lifting device below the first feeding station le is a first lifting device 42, and the other lifting device is a second lifting device 43.

Exemplarily, the lifting device includes a lifting cylinder and a carrying platform, where when the loading assembly 3 is located on the carrying platform, the lifting cylinder can drive the carrying platform to move upward or downward.

Exemplarily, the lifting device is a lifting cylinder.

Exemplarily, the lifting device may be driven by a screw pair structure for lifting.

In the solution of this embodiment of this disclosure, the driving assembly 4 further includes two lifting mechanisms to enable the loading assembly 3 to switch conveniently between the loading station 1a and above or below the loading station 1a, so that the first traversing device 40 and the second traversing device 41 form a cycle, with a high degree of automation in the driving process; and the driving directions of the components in the driving assembly 4 are less likely to interfere with each other, resulting in a stable driving process.

It can be understood that the embodiments of this disclosure are not limited to the driving assembly 4 further including two lifting devices. Exemplarily, the driving assembly 4 further includes a mechanical gripper, where the mechanical gripper is configured to grasp and move the corresponding loading assembly 3 to the second traversing device 41.

In an embodiment, referring to FIG. 4 and FIG. 5, two ends of the loading assembly 3 along the direction of arrangement of the loading stations 1a are each formed with a connecting groove 3a and a plug-in piece 3b adapted to the connecting groove 3a; the connecting groove 3a runs through the loading assembly 3 along the vertical direction 2c; and the plug-in piece 3b is capable of moving into or out of the connecting groove 3a along the vertical direction 2c.

In this embodiment of this disclosure, the loading assembly 3 is formed with the connecting groove 3a and the plug-in piece 3b, and the plug-in piece 3b is capable of moving into or out of the connecting groove 3a along the vertical direction 2c to achieve detachable connection between adjacent loading assemblies 3. When the loading assembly 3 is located at a position corresponding to the lifting device, the lifting device can drive the loading assembly 3 to descend, causing the plug-in piece 3b to disengage from the connecting groove 3a, thereby achieving separation of two adjacent loading assemblies 3, and resulting in a simple detachable connection method and low cost. When the plug-in piece 3b is located in the connecting groove 3a, moving one loading assembly 3 can drive other loading assemblies 3 to move.

It can be understood that the embodiments of this disclosure are not limited to adjacent loading assemblies 3 achieving detachable connection through the cooperation of the connecting groove 3a and the plug-in piece 3b. In an embodiment, adjacent loading assemblies 3 achieve detachable connection through magnetic attraction members.

In an embodiment, referring to FIG. 1, FIG. 3, and FIG. 4, at least two loading stations 1a are driving stations; the driving station is located on a side of the welding station 1b facing the first direction 2a; the first traversing device 40 is capable of being detachably connected to the loading assembly 3 located at the driving station; and the first traversing device 40 is configured to drive the loading assembly 3 located at the driving station to move toward the first direction 2a.

Exemplarily, two driving stations are provided; the driving station close to the welding station 1b is a first driving station 1c, and the other driving station is a second driving station 1d; the loading assembly 3 located at the first driving station 1c is connected to the first traversing device 40; and the first traversing device 40 is capable of moving the loading assembly 3 located at the first driving station 1c to the second driving station 1d. When the first traversing device 40 moves the loading assembly 3 to the second driving station 1d, the first traversing device 40 disengages from the loading assembly 3. One lifting device is located below the second driving station 1d, and the lifting device is capable of moving the loading assembly 3 located at the second driving station 1d toward the second traversing device 41.

In this embodiment of this disclosure, at least two loading stations 1a are driving stations; and the driving station is located on the side of the welding station facing the first direction 2a; the first traversing device 40 drives the loading assemblies 3 by driving the loading assembly 3 located at the driving station; and the first traversing device 40 is positioned as far as possible from the welding station 1b, mitigating interference between the first traversing device 40 and the welding assembly 2, allowing for smoother movement of the loading assembly 3.

It can be understood that this disclosure is not limited to at least two loading stations 1a being driving stations. In an embodiment, the first traversing device 40 directly drives the loading assembly 3 located at the welding station 1b or the feeding station to move along the first direction 2a. In another embodiment, one lifting device is located below the welding station 1b farthest from the feeding station; and when the welding of the bare cell 5 carried by the loading assembly 3 is completed, the lifting device drives the bare cell 5 to move downward.

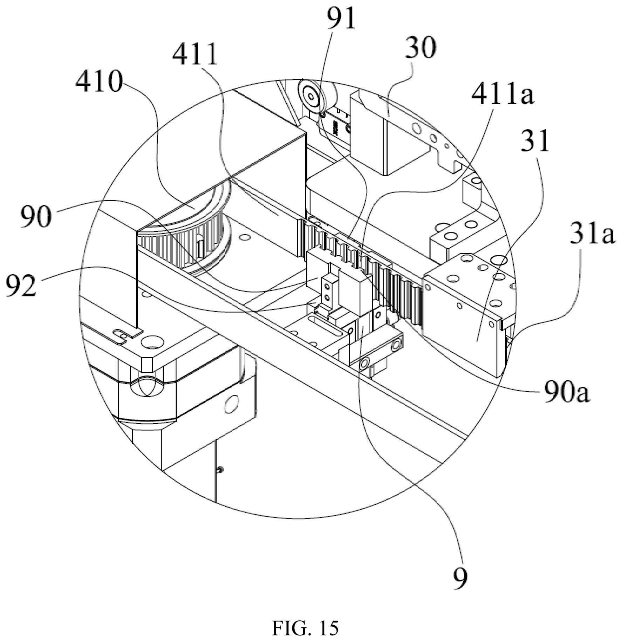

In an embodiment, referring to FIG. 15, the second traversing device 41 includes a belt 411 and a rotating member 410. The belt 411 is formed with an engaging portion 411a. The rotating member 410 is configured to drive the belt 411 to move, where when the lifting device drives the loading assembly 3 to move downward, the loading assembly 3 is capable of being engaged with the engaging portion 411a, so that the belt 411 is capable of driving the loading assembly 3 to move toward the other lifting device along the second direction 2b.

The belt 411 is a belt-driven transport structure, and the belt 411 is primarily configured to drive the movement of the loading assembly 3 below the loading station 1a.

The belt 411 is a synchronous belt or a V-shaped belt.

The rotating member 410 is a structure that provides power to the belt, and the rotation of the rotating member 410 drives the belt to move through friction with the belt.

Exemplarily, the rotating member 410 is a pulley cooperating with the belt 411.

Exemplarily, the rotating member 410 includes a driving wheel and a driven wheel.

Exemplarily, the frame 1 includes a track or a platform configured to support the loading assembly 3.

In the solution of this embodiment of this disclosure, the second traversing device 41 includes the belt 411 and the rotating member 410, and when the lifting device drives the loading assembly 3 to move downward, the loading assembly 3 can be engaged with the engaging portion 411a. The engagement of the loading assembly 3 with the engaging portion 411a enables the loading assembly 3 to move relatively stably along the second direction 2b with the belt 411 toward the other lifting device, resulting in a stable movement process.

It can be understood that the embodiments of this disclosure do not limit whether the belt 411 is formed with the engaging portion 411a, and the loading assembly 3 can be connected to the belt 411 through friction.

In an embodiment, referring to FIG. 15, the welding system further includes a locking device 9; and the locking device 9 is disposed across two opposite sides of the belt 411 to clamp or release the belt 411. The loading assembly 3 includes a loading body 30 and a mounting member 31, where the loading body 30 is movably disposed on the frame 1, and the loading body 30 is configured to carry a bare cell 5; the mounting member 31 is connected to the loading body 30, and the mounting member 31 is provided with a first coupling portion 31a configured to be engaged with the engaging portion 411a; the first coupling portion 31a is located below the loading body 30; when the first coupling portion 31a is engaged with the engaging portion 411a, the locking device 9 is located below the loading body 30; and the locking device 9 is spaced apart from the first coupling portion 31a along an extension direction of the belt 411.

The locking device 9 refers to a component capable of moving close to each other to lock together.

Exemplarily, the locking device 9 drives two clamping blocks to move close to or away from each other through a cylinder to lock or unlock the locking device.

Exemplarily, the locking device 9 can drive two clamping blocks to move close to or away from each other through a screw pair transmission to lock or unlock the locking device.

The loading body 30 refers to a main component configured to carry the bare cell 5.

Exemplarily, the loading body 30 is a body portion of a tray.

Exemplarily, a specific shape of the loading body 30 may be rectangle.

The mounting member 31 refers to a component configured to be connected to the belt 411.

Exemplarily, the mounting member 31 is mounted at an edge of the body portion of the tray.

Exemplarily, the mounting member 31 has a block-like structure.

In the solution of this embodiment of this disclosure, the welding system further includes the locking device 9; the locking device 9 is disposed across the two opposite sides of the belt 411 to clamp or release the belt 411; and the loading assembly 3 includes the mounting member 31, where the mounting member 31 is configured to be engaged with the engaging portion 411a. The locking device 9 can clamp the belt 411, enabling the mounting member 31 of the loading assembly 3 to be engaged more accurately with the engaging portion 411a of the belt 411 via the first coupling portion 31a.

It can be understood that the embodiments of this disclosure do not limit whether the welding system is provided with the locking device 9.

In an embodiment, referring to FIG. 15, the locking device 9 includes a first clamping block 90, a second clamping block 91, and a driving device 92. The first clamping block 90 is located on a side of the belt 411 facing the engaging portion 411a, where the first clamping block 90 is provided with a second coupling portion 90a configured to be engaged with the engaging portion 411a. The second clamping block 91 is located on a side of the belt 411 facing away from the engaging portion 411a. The driving device 92 is at least configured to drive the first clamping block 90 to move close to or away from the second clamping block 91, where when the driving device 92 drives the first clamping block 90 to move close to the second clamping block 91 such that the second coupling portion 90a is engaged with the engaging portion 411a, the lifting device drives the loading assembly 3 to move downward such that the first coupling portion 31a is engaged with the engaging portion 411a.

The first clamping block 90 is a structure for clamping the belt 411, configured to cooperate with the second clamping block 91 to clamp the belt 411, restricting the movement of the belt 411 through the engagement of the second coupling portion 90a with the engaging portion 411a.

Exemplarily, a shape of the first clamping block 90 is rectangle.

Exemplarily, the second coupling portion 90a has a toothed structure.

The second clamping block 91 is a structure for clamping the belt 411, configured to cooperate with the first clamping block 90 to clamp the belt 411, and the second clamping block 91 can provide clamping support force.

Exemplarily, a shape of the first clamping block 90 is rectangle.

Exemplarily, a side of the first clamping block 90 facing the belt 411 and a side of the first clamping block 90 facing away from the belt 411 are both flat.

Exemplarily, both the first clamping block 90 and the second clamping block 91 are plate-shaped.

The driving device 92 is a structure that provides power, and the driving device 92 provides power for the movement of the first clamping block 90 and the second clamping block 91.

Exemplarily, the driving device 92 is a clamping cylinder or a finger cylinder.

Exemplarily, the driving device 92 is a screw pair transmission mechanism to drive the first clamping block 90 and the second clamping block 91 to move close to or away from each other.

In the solution of this embodiment of this disclosure, the locking device 9 includes the first clamping block 90 and the second clamping block 91; the first clamping block 90 is provided with a second coupling portion 90a engaged with the engaging portion 411a; and the driving device 92 is capable of driving the first clamping block 90 and the second clamping block 91 to move close to each other to clamp the belt 411. The engagement of the second coupling portion 90a with the engaging portion 411a enables the locking device to effectively block the movement of the belt 411 while reducing damage to the belt 411 by the locking device 9 to some extent.

It can be understood that this disclosure does not limit whether the first clamping block 90 is formed with the second coupling portion 90a. Exemplarily, the first clamping block 90 and the second clamping block 91 clamp the belt 411 by moving close to each other, and the first clamping block 90 and the second clamping block 91 provide friction force through squeezing to prevent the belt 411 from moving.

In an embodiment, referring to FIG. 4, a plurality of welding stations 1b are provided; each welding station 1b is correspondingly provided with the welding assembly 2; and a plurality of welding assemblies 2 are spaced apart along a direction of arrangement of adjacent loading stations 1a.

Exemplarily, the plurality of welding stations 1b include a first welding station 1g1b and a second welding station 1h1b; the first welding station 1g1b is located at an end along the second direction 2b; other welding stations 1b than the first welding station 1g1b in all welding stations 1b are located on a side of the first welding station 1g1b facing the first direction 2a; the second welding station 1h1b is located at an end along the first direction 2a; and other welding stations 1b than the second welding station 1h1b in all welding stations 1b are located on a side of the second welding station 1h1b facing the second direction 2b.

Exemplarily, the first welding station 1g1b is adjacent to the feeding station.

Exemplarily, the second welding station 1h1b is adjacent to the driving station.

In this embodiment of this disclosure, the plurality of welding stations 1b are provided; each welding station 1b is correspondingly provided with the welding assembly 2; the adapting piece and the tab 5a need to be welded many times to connect a pair of bare cells 5; and the bare cells 5 passing sequentially through the plurality of welding stations 1b can accelerate the welding pace. The plurality of welding assemblies 2 are capable of a plurality of bare cells 5, improving the production efficiency.

It can be understood that the embodiments of this disclosure do not limit the number of welding stations 1b. Exemplarily, one welding stations 1b is provided, and a single welding assembly 2 is used to weld the bare cell 5 located at the welding station 1b.

In an embodiment, referring to FIG. 4, at least one welding assembly 2 and the remaining welding assemblies 2 are respectively located on two sides of the frame 1 along a preset direction 2d, the preset direction 2d intersecting with the first direction 2a and the vertical direction 2c.

Exemplarily, referring to FIG. 4, the preset direction 2d is orthogonally arranged with the first direction 2a.

Exemplarily, referring to FIG. 4, the preset direction 2d is orthogonally arranged with the vertical direction 2c.

Exemplarily, referring to FIG. 4, four welding assemblies 2 are provided, where two welding assemblies 2 are located on a same side of the frame 1 along the preset direction 2d, and the remaining two welding assemblies 2 are located on the other side of the frame 1 along the preset direction 2d.

Exemplarily, four welding assemblies 2 are provided, where one welding assembly 2 is located on one side of the frame 1 along the preset direction 2d, and the remaining three welding assemblies 2 are located on the other side of the frame 1 along the preset direction 2d.

In this embodiment of this disclosure, the at least one welding assembly 2 and the remaining welding assemblies 2 are respectively located on the two sides of the frame 1 along the preset direction 2d, and the arrangement of positions of the welding assemblies 2 makes full use of the vacant space along the preset direction 2d of the frame 1, thereby mitigating interference between the welding assemblies 2.

It can be understood that the embodiments of this disclosure are not limited to at least one welding assembly 2 and the remaining welding assemblies 2 being respectively located on two sides of the frame 1 along the preset direction 2d. In an embodiment, all welding assemblies 2 are located on a single side of the frame 1 along the preset direction 2d.

In an embodiment, referring to FIG. 13, the welding assembly 2 located on one side of the welding station 1b along the preset direction 2d is a first welding assembly 202; the preset direction 2d intersects with the first direction 2a and the vertical direction 2c,; the welding assembly 2 located on the other side of the welding station 1b along the preset direction 2d is a second welding assembly 212; and the first welding assembly 202 and the second welding assembly 212 are alternately arranged along the first direction 2a.

In the solution of this embodiment of this disclosure, the first welding assembly 202 and the second welding assembly 212 are located on two opposite sides along the preset direction 2d, and the first welding assembly 202 and the second welding assembly 212 are alternately arranged along the first direction 2a. The first welding assembly 202 and the second welding assembly 212 can avoid interference with each other as much as possible, resulting in a stable welding process. The alternating arrangement of the first welding assembly 202 and the first welding assembly 212 on the two opposite sides of the preset direction 2d makes the arrangement of the plurality of welding assemblies 2 along the first direction more compact.

It can be understood that the embodiments of this disclosure are not limited to the first welding assembly 202 and the second welding assembly 212 being alternately arranged along the first direction 2a. Exemplarily, at least two first welding assemblies 202 are adjacent along the first direction 2a.

In an embodiment, referring to FIG. 2, the welding system further includes a shaping assembly 6; the shaping assembly 6 includes a driving member 60, a shaping member 61, and two traction members 62; the two traction members 62 are spaced apart along a preset direction 2d, the preset direction 2d intersecting with a direction of arrangement of two adjacent loading stations 1a; two ends of the shaping member 61 are respectively connected to the two traction members 62; the shaping member 61 is configured to shape a tab 5a; the two traction members 62 are drivingly connected to the driving member 60; and the driving member 60 is capable of driving the traction members 62 to move so as to enable the shaping member 61 to shape the tab 5a.

The shaping assembly 6 is a structure for shaping the tab 5a of the bare cell 5, and shaping the tab 5a with the shaping assembly reduces the occurrence of curling or folding of the tab 5a.

The driving member 60 is a structure that provides power, and the driving member 60 provides power to the traction members 62 to drive the traction members 62 to move.

Exemplarily, the driving member 60 may be a cylinder.

Exemplarily, the driving member 60 may be a motor.

The traction member 62 refers to a component configured to fix the shaping member 61, and the traction member 62 can provide support force to the shaping member 61 to enable the shaping member 61 to generate tension so as to shape the tab 5a.

Exemplarily, a shape of the traction member 62 is block-like.

Exemplarily, the traction member 62 is provided with a hole for embedding a rod-shaped shaping member 61.

Exemplarily, the traction member 62 is provided with a connecting post for binding an insulating rope as the shaping member 61.

The shaping member 61 is a main structure in the shaping assembly 6 for shaping the tab 5a. Shaping the tab 5a refers to the shaping member 61 passing under the tab 5a, flipping the downwardly bent tab 5a upward.

Exemplarily, referring to FIG. 1 to FIG. 4, the preset direction 2d is perpendicular to the direction of arrangement of two adjacent loading stations 1a.

In this embodiment of this disclosure, the welding system further includes the shaping assembly 6, and the driving member 60 of the shaping assembly 6 is capable of driving the traction members 62 to move, thereby driving the shaping member 61 connected to the traction members 62 to shape the tab 5a. Shaping the tab 5a can mitigate issues such as curling or folding of the tab 5a during placement of the bare cell 5 onto the loading assembly 3, allowing the tab 5a to fit flatly against the adapting piece, making the welding process more stable, and improving the product quality of the finished battery.

It can be understood that the embodiments of this disclosure are not limited to the shaping assembly 6 including the driving member 60, the shaping member 61, and the traction members 62, with two ends of the shaping member 61 being respectively connected to the two traction members 62. In an embodiment, the shaping assembly 6 includes a driving member 60, two shaping members 61, and two traction members 62, where one end of the shaping member 61 is connected to the traction member 62, and the other end of the shaping member 61 is suspended.

In an embodiment, referring to FIG. 2, two shaping assemblies 6 are provided; and the two shaping assemblies 6 are spaced apart along the direction of arrangement of the two adjacent loading stations 1a.

Exemplarily, a spacing between the two shaping assemblies 6 along the first direction 2a is equal to a spacing between the tabs 5a of a pair of bare cells 5.

In this embodiment of this disclosure, two shaping assemblies 6 are provided; and the two shaping assemblies 6 can respectively shape tabs 5a of a pair of bare cells 5, with high shaping efficiency, thereby improving the feeding speed of the bare cells 5.

It can be understood that the embodiments of this disclosure are not limited to two shaping assemblies 6 being provided. Exemplarily, one shaping assembly 6 is provided.

In an embodiment, referring to FIG. 2, two opposite sides of the corresponding loading assembly 3 along the preset direction 2d are provided with the driving member 60 and the traction member 62; the shaping member 61 is disposed across the two opposite sides of the corresponding loading assembly 3 along the preset direction 2d; the two shaping assemblies 6 are configured to respectively shape tabs 5a of a pair of bare cells 5; and the traction members 62 corresponding to the two shaping assemblies 6 are located between the driving members 60 corresponding to the two shaping assemblies 6 along the direction of arrangement of the two adjacent loading stations 1a.

In this embodiment of this disclosure, the two opposite sides of the corresponding loading assembly 3 along the preset direction 2d are provided with the driving member 60 and the traction member 62; and the shaping member 61 is disposed across the two opposite sides of the corresponding loading assembly 3 along the preset direction 2d. The shaping assemblies 6 can shape the tabs 5a of a pair of bare cells 5, improving the shaping efficiency of the shaping assemblies 6, thereby reducing the overall processing time.

It can be understood that the embodiments of this disclosure are not limited to the two opposite sides of the corresponding loading assembly 3 along the preset direction 2d being provided with the driving member 60 and the traction member 62. Exemplarily, one side of the loading assembly 3 along the preset direction 2d is provided with the driving member 60 and the traction member 62, the shaping member 61 is a shaping rod, and the shaping rod is disposed across two opposite sides of the corresponding loading assembly 3.

In an embodiment, referring to FIG. 2, there are at least two shaping members 61 corresponding to each shaping assembly 6; a direction of arrangement of the at least two shaping members 61 spaced apart corresponding to each shaping assembly 6 is arranged along the direction of arrangement of the two adjacent loading stations 1a; and the driving member 60 drives the traction members 62 to move so as to drive the at least two corresponding shaping members 61 to move along the direction of arrangement of the two adjacent loading stations 1a.

Exemplarily, the number of shaping members 61 is two, three, five, or six.

In this embodiment of this disclosure, there are at least two shaping members 61, and the direction of arrangement of the at least two shaping members 61 spaced apart corresponding to each shaping assembly 6 is arranged along the direction of arrangement of the two adjacent loading stations 1a. During the process of shaping the tab 5a through the shaping members 61, the shaping effect on the tab 5a is improved, and the contact process is smoother.

It can be understood that the embodiments of this disclosure do not limit the number of shaping members 61. Exemplarily, one shaping member 61 is provided.

In an embodiment, a material of the shaping member 61 is an insulating material.

In an embodiment, the shaping member 61 is an insulating wire.

The insulating wire is a slender structure made of an insulating material in the form of a wire or rope.

In this embodiment of this disclosure, the material of the shaping member 61 is the insulating material. This mitigates the risk of the shaping member 61 causing a short circuit in the bare cell 5 during the process of shaping the tab 5a of the bare cell 5. Furthermore, the shaping member 61 is the insulating wire, a flexible member can reduce damage to the tab 5a by the shaping member 61.

It can be understood that the embodiments of this disclosure are not limited to the shaping member 61 being the insulating wire. In an embodiment, the shaping member 61 is an insulating rod capable of withstanding a certain bending moment. In another embodiment, the shaping assembly 6 includes a driving member 60, a shaping member 61, and a traction member 62; the shaping member 61 is an insulating rod; one end of the shaping member 61 is connected to the traction member 62, and the other end of the shaping member 61 is suspended; four shaping assemblies 6 are provided; and the four shaping assemblies 6 are capable of respectively shaping four tabs 5a of a group of bare cells 5.

In an embodiment, the driving assembly 4 is capable of driving the loading assembly 3 to sequentially move through each welding station 1b from the feeding station along the first direction 2a; and the loading assembly 3, under the action of the driving assembly 4, moves above or below the loading station 1a along the second direction 2b to return to the corresponding feeding station.

In this embodiment of this disclosure, under the driving of the driving assembly 4, the loading assembly 3 moves from the feeding station through each welding station 1b along the first direction 2a and moves above or below the loading station 1a along the second direction 2b to return to the corresponding feeding station. The movement process has a high degree of automation, reducing manual operation to some extent.

It can be understood that the embodiments of this disclosure are not limited to the driving assembly 4 being capable of driving the loading assembly 3 to sequentially move through each welding station 1b from the feeding station along the first direction 2a. Exemplarily, the driving assembly 4 drives the loading assembly 3 to move through some welding stations 1b along the first direction 2a. During the movement along the second direction 2b, the loading assembly 3 moves through the remaining welding stations 1b.

In an embodiment, the first direction 2a is a direction from the feeding station toward the welding station 1b along the direction of arrangement of the plurality of loading stations 1a; and the first direction 2a intersects with the vertical direction 2c.

Exemplarily, referring to FIG. 1, the first direction 2a is perpendicular to the vertical direction 2c.

In this embodiment of this disclosure, the first direction 2a is the direction from the feeding station toward the welding station 1b, and the first direction 2a intersects with the vertical direction 2c. The feeding station and the welding station 1b are connected by the plurality of loading stations 1a arranged substantially along the first direction 2a, minimizing the distance from the feeding station to the welding station 1b as much as possible, and resulting in high processing efficiency.

It can be understood that the embodiments of this disclosure are not limited to the first direction 2a being the direction from the feeding station toward the welding station 1b along the direction of arrangement of the plurality of loading stations 1a. Exemplarily, a direction of arrangement of at least one welding station 1b and any other welding station 1b intersects with the first direction 2a.

In an embodiment, the loading assemblies 3 corresponding to the plurality of loading stations 1a are sequentially connected to each other.

The loading assemblies 3 corresponding to the plurality of loading stations 1a being sequentially connected to each other means that every two adjacent loading assemblies 3 of the loading stations 1a are connected together.

Exemplarily, referring to FIG. 1, the plurality of loading stations 1a are arranged along the first direction, the loading assemblies 3 corresponding to the plurality of loading stations 1a are arranged along the first direction, and every two adjacent loading assemblies 3 are connected to each other, thereby achieving sequential connection of the loading assemblies 3 corresponding to the plurality of loading stations 1a.

In this embodiment of this disclosure, the loading assemblies 3 corresponding to the plurality of loading stations 1a are sequentially connected to each other, and driving any one of the sequentially connected loading assemblies 3 can drive the plurality of loading assemblies 3 to move synchronously, allowing flexible positioning of the driving assembly 4.

It can be understood that the embodiments of this disclosure are not limited to the loading assemblies 3 corresponding to the plurality of loading stations 1a being sequentially connected to each other. Exemplarily, at least one loading assembly 3 is spaced apart from a loading assembly 3 adjacent thereto.

According to a second aspect of this disclosure, a battery production line is provided. Referring to FIG. 4, the battery production line includes the welding system according to any one of the foregoing embodiments and a feeding assembly 7, where the feeding assembly 7 is configured to feed the welding system.

Exemplarily, the battery production line further includes an adhesive application assembly 8, where the adhesive application assembly 8 is configured to apply an adhesive to a welded bare cell 5.

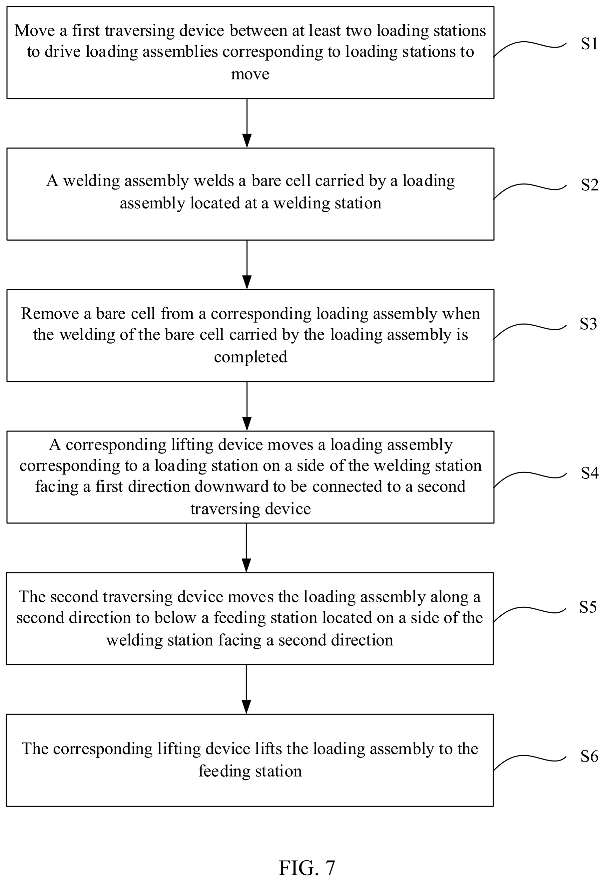

According to a third aspect of this disclosure, a welding method is provided. Referring to FIG. 7, the welding method is applied to a welding system; the welding system includes a welding assembly 2, a loading assembly 3, and a driving assembly 4, the driving assembly 4 including a first traversing device 40, a second traversing device 41, and two lifting devices; and the welding method including the following steps:
Step S1: Move the first traversing device between at least two loading stations to drive loading assemblies corresponding to the loading stations to move.
Step S2: The welding assembly welds a bare cell carried by a loading assembly located at a welding station.
Step S3: Remove the bare cell from the corresponding loading assembly when the welding of the bare cell carried by the loading assembly is completed.
Step S4: The corresponding lifting device moves a loading assembly corresponding to a loading station on a side of the welding station facing a first direction downward to be connected to the second traversing device.
Step S5: The second traversing device moves the loading assembly along a second direction to below a feeding station located on a side of the welding station facing the second direction.
Step S6: The corresponding lifting device lifts the loading assembly to the feeding station.

The first direction 2a is opposite to the second direction 2b.

In this embodiment of this disclosure, a cycle of the loading station 1a along the first direction 2a, the second direction 2b, and the vertical direction 2c is achieved through the first traversing device 40, the second traversing device 41, and the two lifting devices of the driving assembly 4. The first direction 2a and the second direction 2b are spaced apart along the vertical direction 2c, reducing the dimension of the arrangement of the welding assembly 2 in a width direction. During the movement of the loading assembly 3 along the first direction 2a, the bare cell 5 carried by the loading assembly 3 can be welded by the welding assemblies 2 located on two sides of the frame 1, thereby reducing the occupied area of the welding system.

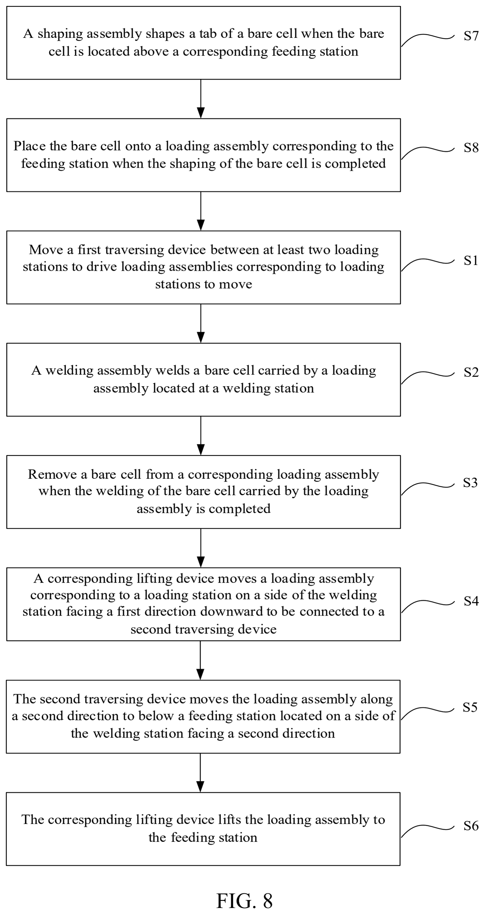

In an embodiment, referring to FIG. 8, the welding method further includes the following steps:
Step S7: A shaping assembly shapes a tab of a bare cell when the bare cell is located above the corresponding feeding station.
Step S8: Place the bare cell onto the loading assembly corresponding to the feeding station when the shaping of the bare cell is completed.

In this embodiment of this disclosure, when the bare cell 5 is located above the corresponding feeding station, the tab 5a of the bare cell 5 is shaped by the shaping assembly 6. Shaping the tab 5a can mitigate issues such as curling or folding of the tab 5a during placement of the bare cell 5 onto the loading assembly 3, allowing the tab 5a to fit flatly against the adapting piece, making the welding process more stable and improving the product quality of the finished battery.

It can be understood that the embodiments of this disclosure are not limited to whether the bare cell 5 is shaped.

Exemplarily, when one feeding stations is provided, the shaping assembly 6 shapes the tab 5a of the bare cell 5 during the feeding process of the bare cell 5.

Exemplarily, when the feeding stations include a first feeding station 1e and a second feeding station 1f; the shaping assembly 6 is located above the second feeding station 1f; and during the process of placing the bare cell 5 onto the loading assembly 3 corresponding to the second feeding station 1f, the shaping assembly 6 shapes the tab 5a of the bare cell 5.

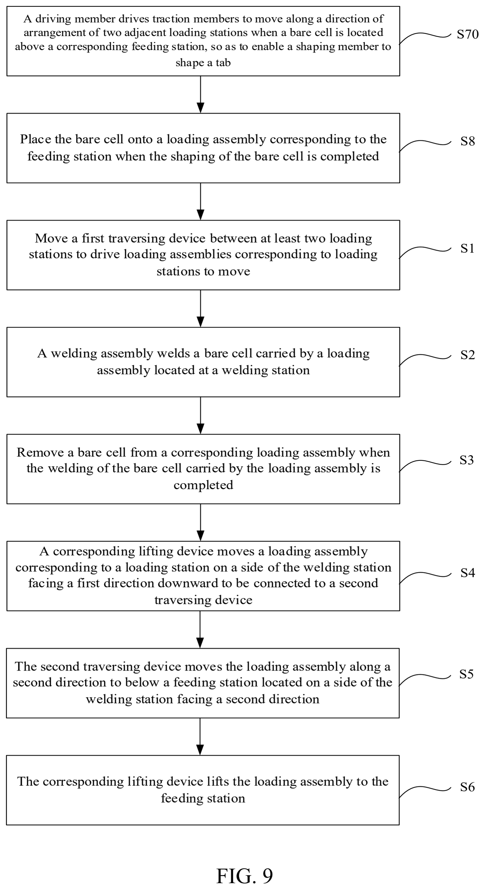

In an embodiment, referring to FIG. 9, the shaping assembly 6 includes a driving member 60, a shaping member 61, and two traction members 62; and that the shaping assembly 6 shapes the tab 5a of the bare cell 5 when the bare cell 5 is located above the corresponding feeding station includes the following step:
Step S70: The driving member drives the traction members to move along a direction of arrangement of two adjacent loading stations when the bare cell is located above the corresponding feeding station, so as to enable the shaping member to shape the tab.

In this embodiment of this disclosure, the driving member 60 drives the traction members 62 to move along the direction of arrangement of the adjacent loading stations 1a so as to enable the shaping member 61 to shape the tab 5a. The shaping process is relatively convenient and simple, and the shaping member 61 can shape two tabs 5a of the bare cell 5 along the direction of arrangement of the two traction members 62.

According to a fourth aspect of this disclosure, a feeding assembly 7 for loading an adapting piece is provided. The feeding assembly 7 includes a feeding frame 1, a detection assembly, a positioning tray, a grabbing assembly, and a transfer device. The feeding frame 1 has a working station. The detection assembly is disposed on the feeding frame 1, and the detection assembly is configured to detect an adapting piece carried by a container at the working station. The positioning tray is disposed on the feeding frame 1, and the positioning tray is configured to position the adapting piece. The grabbing assembly is disposed on the feeding frame 1, and the grabbing assembly is configured to grab the adapting piece carried by the container at the working station a and move the adapting piece to the positioning tray. The transfer device is disposed on the feeding frame 1, and the transfer device is configured to pick up the adapting piece in the positioning tray and transfer the adapting piece to a corresponding position.

Exemplarily, the detection assembly may include an image acquisition device. For example, the image acquisition device may be a camera or a webcam.

Exemplarily, the container is a blister tray.

Exemplarily, the camera may be a CCD (Charge Coupled Device, charge coupled device) camera.

In this embodiment of this disclosure, the feeding assembly 7 is provided with the positioning tray, the grabbing assembly can move the adapting piece carried by the container at the working station to the positioning tray to position the adapting piece, and the transfer device can move the positioned adapting piece to a corresponding position. The adapting piece is positioned before the adapting piece is fed. When the fed adapting piece is welded to the tab 5a of the bare cell 5, a weld mark can be accurately located at a predetermined position. This results in a stable force distribution in the battery cell formed after welding and smooth current flow, improving the yield rate of the finished battery.

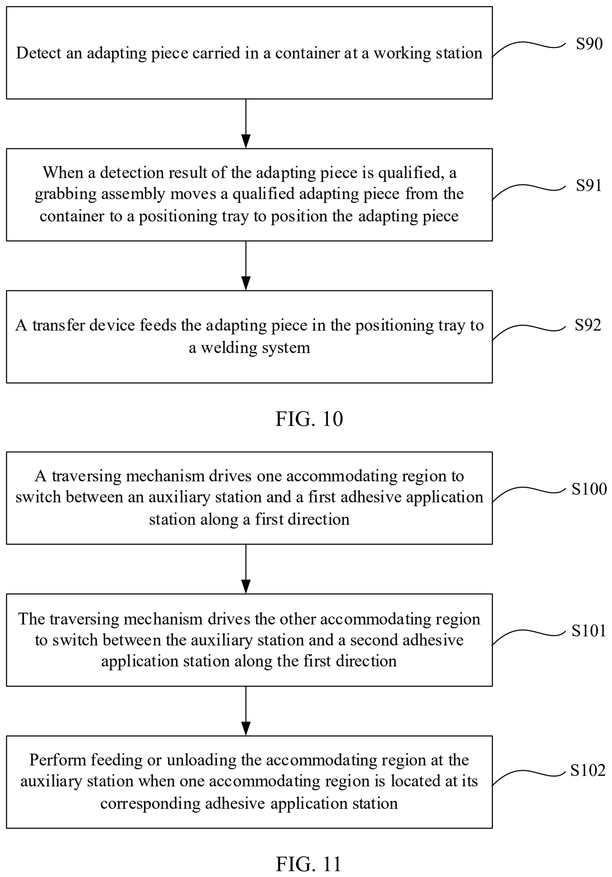

According to a fifth aspect of this disclosure, a method for feeding an adapting piece is provided. Referring to FIG. 10, the method includes the following steps:
Step S90: Detect an adapting piece carried in a container at a working station.
Step S91: When a detection result of the adapting piece is qualified, a grabbing assembly moves a qualified adapting piece from the container to a positioning tray to position the adapting piece.
Step S92: A transfer device feeds the adapting piece in the positioning tray to a welding system.

Exemplarily, the detection result of the adapting piece includes at least one of the color, size, shape, and positional accuracy of the adapting piece.

In this embodiment of this disclosure, when the detection result of the adapting piece is qualified, the grabbing assembly moves the qualified adapting piece from the container to the positioning tray for positioning. The adapting piece is positioned before the adapting piece is fed. When the fed adapting piece is welded to the tab 5a of the bare cell 5, a weld mark can be accurately located at a predetermined position, thereby improving the yield rate of the finished battery.

According to a sixth aspect of this disclosure, an adhesive application assembly 8 is provided. The adhesive application assembly 8 has auxiliary stations for feeding and unloading, and the adhesive application assembly 8 includes:
adhesive application components having adhesive application stations for applying adhesives, where at least two adhesive application components are provided; a direction of adhesive application stations of a plurality of adhesive application components is a first direction 2a; an auxiliary station is provided between at least two adjacent adhesive application components; among the two adjacent adhesive application components corresponding to the auxiliary station, the adhesive application station of one adhesive application component is a first adhesive application station, and the adhesive application station of the other adhesive application component is a second adhesive application station; and
a traversing mechanism having two accommodating regions arranged along the first direction 2a, where the accommodating regions configured to hold bare cells 5 to be adhesive-applied; the traversing mechanism moves along the first direction 2a to switch one accommodating region between the first adhesive application station and the auxiliary station and to switch the other accommodating region between the second adhesive application station and the auxiliary station.

The adhesive application component refers to a structure in the adhesive application assembly 8 that performs the adhesive application action on the bare cell 5, and is capable of completely and securely applying an adhesive to a portion of the bare cell 5 to be adhesive-applied.

Exemplarily, two adhesive application components may be provided, and the two adhesive application components corresponds to one traversing mechanism.

Exemplarily, the number of adhesive application components may be greater than two. For example, the number of adhesive application components may be three, four, or seven.

Exemplarily, the number of adhesive application components may be greater than two, where an auxiliary station is provided between every two adjacent adhesive application components, and every two adjacent adhesive application components corresponds to one traversing mechanism.

The traversing mechanism is a main structure that drives the accommodating regions to switch between the first adhesive application station, the second adhesive application station, and the auxiliary station.

Exemplarily, the traversing mechanism reciprocates along the first direction 2a.

The bare cell 5 is a pair of welded bare cells 5, where the two bare cells 5 are arranged opposite each other near the side of the tab 5aand connected through an adapting piece. Exemplarily, the bare cell 5 to be adhesive-applied is a bare cell 5 welded with the adapting piece.

Exemplarily, the tabs 5a of the pair of bare cells 5 are welded to the adapting piece.

Exemplarily, when the adhesive is applied to the bare cell 5, an adhesive film may be disposed across the bare cell 5 and the adapting piece.

In this embodiment of this disclosure, two accommodating regions can move along the first direction 2a with the traversing mechanism. One accommodating region is moved to the corresponding adhesive application station, and the other accommodating region is moved to the auxiliary station. The adhesive application time of the bare cell 5 in the accommodating region at the corresponding adhesive application station can be fully utilized to perform feeding or unloading of the bare cell 5 in the accommodating region at the auxiliary station, reducing the waiting time for adhesive application of the bare cell 5 and accelerating the adhesive application pace of the adhesive application assembly 8.

According to a seventh aspect of this disclosure, an adhesive application method is provided. Referring to FIG. 11, the method includes the following steps:
Step S100: A traversing mechanism drives one accommodating region to switch between an auxiliary station and a first adhesive application station along a first direction.
Step S101: The traversing mechanism drives the other accommodating region to switch between the auxiliary station and a second adhesive application station along the first direction.
Step S102: Perform feeding or unloading the accommodating region at the auxiliary station when one accommodating region is located at its corresponding adhesive application station.

In the adhesive application method provided by this embodiment of this disclosure, the two accommodating region switch between the adhesive application stations and the auxiliary station; when one accommodating region is at its corresponding adhesive application station and the other accommodating region is at the auxiliary station, the adhesive application time of the bare cell 5 in the accommodating region at the corresponding adhesive application station can be fully utilized to perform feeding or unloading of the bare cell 5 in the accommodating region at the auxiliary station, accelerating the adhesive application pace of the adhesive application component.

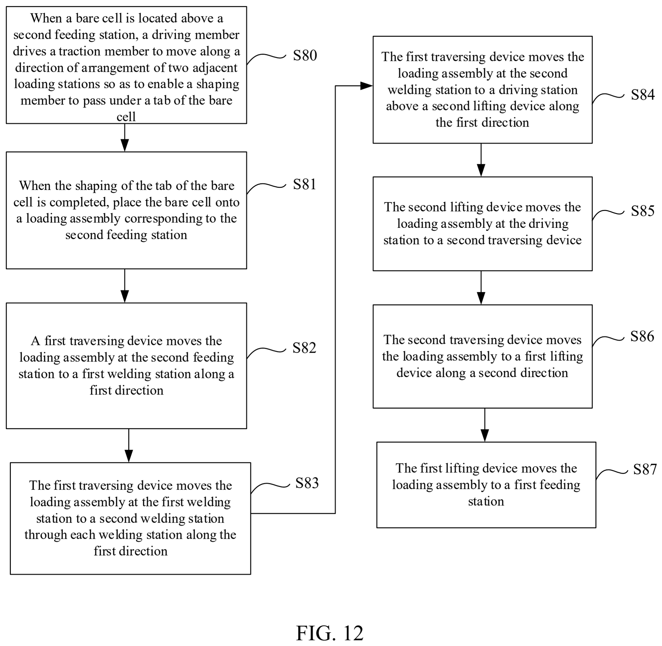

Referring to FIG. 12, a method is described through the following embodiment.

Step S80: When a bare cell is located above a second feeding station, a driving member drives a traction member to move along a direction of arrangement of two adjacent loading stations so as to enable a shaping member to pass under a tab of the bare cell.

Step S81: When the shaping of the tab of the bare cell is completed, place the bare cell onto a loading assembly corresponding to the second feeding station.

Step S82: A first traversing device moves the loading assembly at the second feeding station to a first welding station along a first direction.

Step S83: The first traversing device moves the loading assembly at the first welding station to the first welding station through each welding station along the first direction.

Step S84: The first traversing device moves the loading assembly at the first welding station to a driving station above a second lifting device along the first direction.

Step S85: The second lifting device moves the loading assembly at the driving station to a second traversing device.

Step S86: The second traversing device moves the loading assembly to a first lifting device along a second direction.

Step S87: The first lifting device moves the loading assembly to a first feeding station.

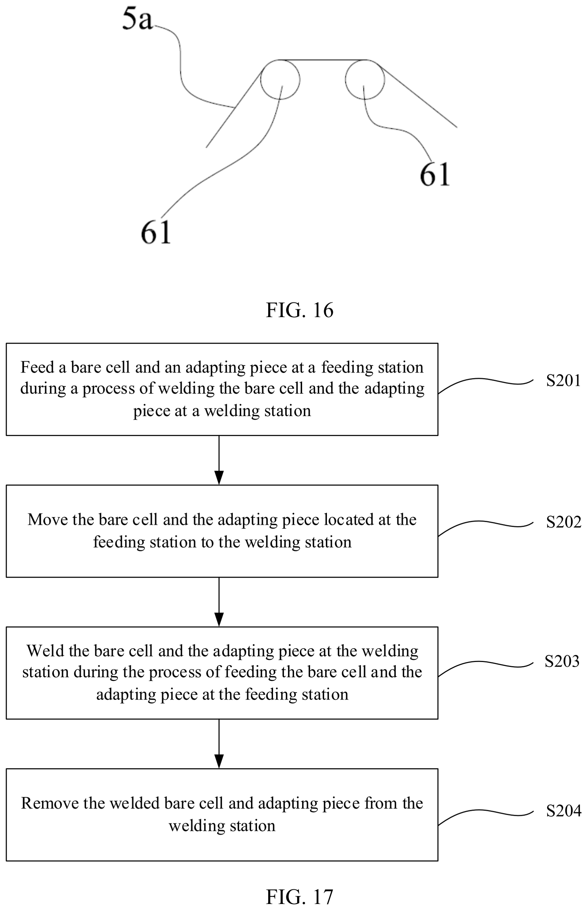

An embodiment of this disclosure provides a welding method. Referring to FIG. 17, the welding method includes the following steps:
S201: Feed a bare cell and an adapting piece at a feeding station during a process of welding the bare cell and the adapting piece at a welding station.
S202: Move the bare cell and the adapting piece located at the feeding station to the welding station.
S203: Weld the bare cell and the adapting piece at the welding station during the process of feeding the bare cell and the adapting piece at the feeding station.
S204: Remove the welded bare cell and adapting piece from the welding station.

In this embodiment of this disclosure, by moving the bare cell and the adapting piece from the feeding station to the welding station, the bare cell and the adapting piece at the welding station can be welded, and the feeding station becomes vacant after the bare cell and the adapting piece are moved. During the welding process, the feeding of the bare cell and the adapting piece can be performed at the feeding station. The feeding station and the welding station work together without interfering with each other, and the feeding at the feeding station and the welding at the welding station can occur simultaneously, resulting in a faster welding pace of the welding system and improved battery production efficiency.

The foregoing embodiments are merely preferred embodiments of this disclosure which are not intended to limit this disclosure. Persons skilled in the art understand that this disclosure may have various modifications and variations. Any modifications, equivalent replacements, improvements, and the like made without departing from the spirit and principle of this disclosure shall fall within the protection scope of this disclosure.

## Claims

1. A welding system, wherein the welding system is configured to weld an adapting piece and comprises:
a frame having a plurality of loading stations spaced apart, wherein a direction of arrangement of the plurality of loading stations intersects with a vertical direction, at least one of the loading stations is a welding station, and at least one of the loading stations is a feeding station;
a welding assembly disposed on the frame;
a loading assembly movably disposed on the frame, wherein each of the loading stations is correspondingly provided with the loading assembly, the loading assembly is configured to carry a bare cell, and the welding assembly is configured to weld the bare cell carried by the loading assembly located at the welding station; and
a driving assembly, wherein the driving assembly is capable of driving the loading assembly to sequentially move through each of the loading stations along a first direction; the loading assembly, under the action of the driving assembly, moves above or below the loading station along a second direction to return to a corresponding loading station; the second direction is opposite to the first direction; and the feeding station is located on a side of the welding station facing the second direction.

2. The welding system according to claim 1, wherein two adjacent loading assemblies are detachably connected to each other; the driving assembly comprises a first traversing device and a second traversing device; the first traversing device is capable of driving the loading assembly to sequentially move through each of the loading stations along the first direction; and the second traversing device is capable of being drivingly connected to the loading assembly, and the second traversing device is configured to move the loading assembly along the second direction.

3. The welding system according to claim 2, wherein the first traversing device is capable of driving the loading assembly to sequentially move through each of the welding stations from the feeding station along the first direction; and the second traversing device is configured to move the loading assembly above or below the loading station along the second direction to return to the corresponding feeding station.

4. The welding system according to claim 2, wherein the driving assembly further comprises two lifting devices; the two lifting devices are respectively located below the loading stations at two ends of the direction of arrangement of the loading stations; and the second traversing device is configured to move the loading assembly from one lifting device to the other lifting device along the second direction.

5. The welding system according to claim 4, wherein two ends of the loading assembly along the direction of arrangement of the loading stations are each formed with a connecting groove and a plug-in piece adapted to the connecting groove; the connecting groove runs through the loading assembly along the vertical direction; and the plug-in piece is capable of moving into or out of the connecting groove along the vertical direction.

6. The welding system according to claim 4, wherein at least two of the loading stations are driving stations; the driving station is located on a side of the welding station facing the first direction; the first traversing device is capable of being detachably connected to the loading assembly located at the driving station; and the first traversing device is configured to drive the loading assembly located at the driving station to move toward the first direction.

7. The welding system according to claim 4, wherein the second traversing device comprises:
a belt formed with an engaging portion; and
a rotating member configured to drive the belt to move, wherein when the lifting device drives the loading assembly to move downward, the loading assembly is capable of being engaged with the engaging portion, so that the belt is capable of driving the loading assembly to move toward the other lifting device along the second direction.

8. The welding system according to claim 7, wherein the welding system further comprises a locking device; the locking device is disposed across two opposite sides of the belt to clamp or release the belt; and the loading assembly comprises:
a loading body movably disposed on the frame, wherein the loading body is configured to carry a bare cell; and
a mounting member connected to the loading body, wherein the mounting member is provided with a first coupling portion configured to be engaged with the engaging portion; the first coupling portion is located below the loading body; when the first coupling portion is engaged with the engaging portion, the locking device is located below the loading body; and the locking device is spaced apart from the first coupling portion along an extension direction of the belt.

9. The welding system according to claim 8, wherein the locking device comprises:
a first clamping block located on a side of the belt facing the engaging portion, wherein the first clamping block is provided with a second coupling portion configured to be engaged with the engaging portion;
a second clamping block located on a side of the belt facing away from the engaging portion; and
a driving device at least configured to drive the first clamping block to move close to or away from the second clamping block, wherein when the driving device drives the first clamping block to move close to the second clamping block such that the second coupling portion is engaged with the engaging portion, the lifting device drives the loading assembly to move downward such that the first coupling portion is engaged with the engaging portion.

10. The welding system according to any one of claims 1 to 9, wherein a plurality of welding stations are provided; each of the welding stations is correspondingly provided with the welding assembly; and a plurality of welding assemblies are spaced apart along a direction of arrangement of adjacent loading stations.

11. The welding system according to claim 10, wherein at least one of the welding assemblies and the remaining corresponding welding assemblies are respectively located on two sides of the frame along a preset direction, the preset direction intersecting with the first direction and the vertical direction.

12. The welding system according to claim 10, wherein the welding assembly located on one side of the welding station along the preset direction is a first welding assembly; the preset direction intersects with the first direction and the vertical direction; the welding assembly located on the other side of the welding station along the preset direction is a second welding assembly; and the first welding assembly and the second welding assembly are alternately arranged along the first direction.

13. The welding system according to any one of claims 1 to 9, wherein the welding system further comprises a shaping assembly; the shaping assembly comprises a driving member, a shaping member, and two traction members; the two traction members are spaced apart along a preset direction, the preset direction intersecting with a direction of arrangement of two adjacent loading stations; two ends of the shaping member are respectively connected to the two traction members; the shaping member is configured to shape a tab; the two traction members are drivingly connected to the driving member; and the driving member is capable of driving the traction members to move so as to enable the shaping member to shape the tab.

14. The welding system according to claim 13, wherein two shaping assemblies are provided; and the two shaping assemblies are spaced apart along the direction of arrangement of the two adjacent loading stations.

15. The welding system according to claim 14, wherein two opposite sides of the corresponding loading assembly along the preset direction are provided with the driving member and the traction member; the shaping member is disposed across the two opposite sides of the corresponding loading assembly along the preset direction; the two shaping assemblies are configured to respectively shape tabs of a pair of bare cells; and the traction members corresponding to the two shaping assemblies are located between the driving members corresponding to the two shaping assemblies along the direction of arrangement of the two adjacent loading stations.

16. The welding system according to claim 13, wherein there are at least two shaping members corresponding to each shaping assembly; a direction of arrangement of the at least two shaping members spaced apart corresponding to each shaping assembly is arranged along the direction of arrangement of the two adjacent loading stations; and the driving member drives the traction members to move so as to drive the at least two corresponding shaping members to move along the direction of arrangement of the two adjacent loading stations.

17. The welding system according to claim 13, wherein a material of the shaping member is an insulating material; and the shaping member is an insulating wire.

18. The welding system according to any one of claims 1 to 9, wherein the driving assembly is capable of driving the loading assembly to sequentially move through each of the welding stations from the feeding station along the first direction; and the loading assembly, under the action of the driving assembly, moves above or below the loading station along the second direction to return to the corresponding feeding station.

19. The welding system according to any one of claims 1 to 9, wherein the first direction is a direction from the feeding station toward the welding station along the direction of arrangement of the plurality of loading stations; and the first direction intersects with the vertical direction.

20. The welding system according to any one of claims 1 to 9, wherein the loading assemblies corresponding to the plurality of loading stations are sequentially connected to each other.

21. A battery production line, comprising:
the welding system according to any one of claims 1 to 20; and
a feeding assembly configured to feed the welding system.

22. A welding method, wherein the welding method is applied to a welding system; the welding system comprises a welding assembly, a loading assembly, and a driving assembly, the driving assembly comprising a first traversing device, a second traversing device, and two lifting devices; and the welding method comprises:
moving the first traversing device between at least two loading stations to drive loading assemblies corresponding to the loading stations to move;
welding, by the welding assembly, a bare cell carried by the loading assembly located at a welding station;
removing the bare cell from the corresponding loading assembly when the welding of the bare cell carried by the loading assembly is completed;
moving, by the corresponding lifting device, a loading assembly corresponding to a loading station on a side of the welding station facing a first direction downward to be connected to the second traversing device;
moving, by the second traversing device, the loading assembly along a second direction to below a feeding station located on a side of the welding station facing the second direction; and
lifting, by the corresponding lifting device, the loading assembly to the feeding station;
wherein the first direction is opposite to the second direction.

23. The welding method according to claim 22, wherein the welding method further comprises:
shaping, by a shaping assembly, a tab of a bare cell when the bare cell is located above the corresponding feeding station; and
placing the bare cell onto the loading assembly corresponding to the feeding station when the shaping of the bare cell is completed.

24. The welding method according to claim 23, wherein the shaping assembly comprises a driving member, a shaping member, and two traction members; and the shaping, by a shaping assembly, a tab of a bare cell comprises:
driving, by the driving member, the traction members to move along a direction of arrangement of two adjacent loading stations so as to enable the shaping member to shape the tab.

25. A welding method, wherein the welding method comprises:
feeding a bare cell and an adapting piece at a feeding station during a process of welding the bare cell and the adapting piece at a welding station;
moving the bare cell and the adapting piece located at the feeding station to the welding station;
welding the bare cell and the adapting piece at the welding station during the process of feeding the bare cell and the adapting piece at the feeding station; and
removing the welded bare cell and adapting piece from the welding station.
